# DEMANDE DE BREVET EUROPEEN

(11) **EP 1 463 165 A1**
(43) Date de publication de la demande: **29.09.2004**
(21) Numéro de dépôt: 04101006.7
(22) Date de dépôt: 11.03.2004
(51) Int. Cl.: H01S 3/0941, H01S 3/042

(54) **Structure de pompage optique d'un milieu amplificateur**

(30) Priorité: 28.03.2003 FR 0303892
(71) Demandeur: Thales, 92200 Neuilly Sur Seine (FR)
(72) Inventeur: DURAND, Eric THALES THALES Intellectual Property, 94117 Arcueil cedex (FR)
(74) Mandataire: Brochard, Pascale

(57) **Abrégé**

L'invention concerne une structure de pompage optique d'un milieu amplificateur et s'applique notamment aux lasers à solide pompés par diodes laser.

Selon l'invention, la structure de pompage comprend un ensemble d'au moins trois sources lumineuses de pompage (22, 22') émettant chacune un faisceau de pompage dirigé directement vers le milieu amplificateur, un réflecteur diffusant entourant le milieu amplificateur et formé d'au moins trois blocs réflecteurs (24, 24'), chaque bloc réflecteur présentant une paroi interne propre à réfléchir la lumière non absorbée par le milieu amplificateur et étant porté par un longeron (21,21'), lesdits longerons supportant chacun au moins une source de pompage.

## Description

L'invention concerne une structure de pompage optique d'un milieu amplificateur et s'applique notamment aux lasers à solide pompés par diodes laser.

Dans les structures de pompage actuelles, on cherche à disposer autour d'un milieu amplificateur, généralement un milieu amplificateur solide en forme de barreau, un nombre important de sources lumineuses de pompage qui peuvent être par exemple des diodes laser, des barrettes de diodes laser ou des empilements de barrettes. Ces sources sont habituellement disposées radialement autour du barreau de telle sorte à assurer un pompage direct du barreau. Ce type de pompage reproduit la symétrie de répartition des diodes. Ainsi, si par exemple les diodes sont disposées suivant un pentagone autour du barreau, celui-ci est excité en étoile. Le pompage est donc inhomogène ce qui est préjudiciable à la réalisation de lasers de bonne qualité de faisceau.

Des procédés de pompage de type indirect sont proposés afin d'améliorer l'homogénéité du pompage (voir par exemple la demande de brevet français FR 2 797 105). Pour cela, un réflecteur diffusant est placé autour du barreau et les faisceaux émis par les diodes laser sont envoyés sur le réflecteur où ils subissent des réflexions multiples avant d'être absorbés par le milieu amplificateur. Ces solutions, qui nécessitent d'incliner les diodes laser et de les éloigner de telle sorte que les faisceaux de pompage ne rencontrent pas directement le milieu amplificateur, assurent un pompage homogène au prix d'une complexité de réalisation accrue et d'une perte de compacité de la structure.

L'invention propose une structure de pompage homogène dans laquelle est conservé un pompage direct du milieu amplificateur, permettant une structure de pompage très compacte et de réalisation simple. Pour cela elle met en oeuvre une structure de pompage modulaire avec notamment un réflecteur diffusant formé de plusieurs blocs réflecteurs, chaque bloc réflecteur étant supporté par un longeron.

Plus précisément, l'invention propose une structure de pompage optique d'un milieu amplificateur, comprenant un ensemble d'au moins trois sources lumineuses de pompage émettant chacune un faisceau de pompage dirigé directement vers le milieu amplificateur, caractérisé en ce qu'il comprend un réflecteur diffusant entourant le milieu amplificateur et formé d'au moins trois blocs réflecteurs, chaque bloc réflecteur présentant une paroi interne propre à réfléchir la lumière non absorbée par le milieu amplificateur et étant porté par un longeron, lesdits longerons supportant chacun au moins une source de pompage.

La structure de pompage selon l'invention permet en outre, grâce sa structure modulaire, d'intégrer de façon simple et compacte un circuit d'eau pour le refroidissement du barreau et des sources lumineuses de pompage.

D'autres avantages et caractéristiques apparaîtront plus clairement à la lecture de la description qui suit, illustrée par les figures annexées qui représentent :
- La figure 1, un exemple de réalisation d'une structure de pompage d'un milieu amplificateur selon l'invention mettant en oeuvre 3 blocs réflecteurs ;
- La figure 2, un exemple de réalisation d'un longeron dans la structure de pompage de la figure 1;
- La figure 3, un autre exemple de réalisation d'une structure de pompage selon l'invention mettant en oeuvre 5 blocs réflecteurs :

- Les figures 4A et 4B, des courbes montrant la mesure de la répartition de l'énergie lumineuse dans le milieu amplificateur selon deux axes respectivement, dans l'exemple de la figure 2.

Sur les figures, les éléments identiques sont indexés par les mêmes repères.

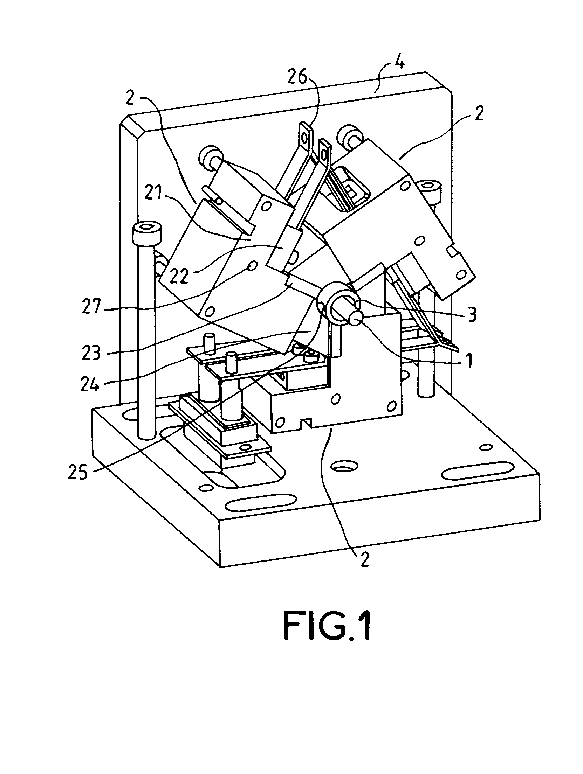

La figure 1 représente une vue (partielle) d'un exemple de réalisation d'une structure de pompage optique d'un milieu amplificateur selon l'invention. Dans cet exemple, le milieu amplificateur 1 forme un barreau cylindrique à base sensiblement circulaire. Le milieu amplificateur 1 est entouré dans cet exemple par trois modules 2 comprenant chacun un longeron 21 supportant des sources de pompage 22. Le milieu amplificateur est pompé par au moins trois sources de pompage. Les sources de pompage peuvent être par exemple des diodes laser, des barrettes de diodes laser, ou des empilements (ou « stacks ») de barrettes de diodes laser fonctionnant en mode continu ou quasi-continu, les barrettes étant parallèles aux génératrices du cylindre que forme le milieu amplificateur. Dans l'exemple de la figure 1, les sources de pompage sont des empilements de barrettes de diodes laser au nombre de six, chaque longeron supportant deux sources de pompage de telle sorte que les sources soient réparties radialement autour du milieu amplificateur selon trois rangées, formant ainsi deux couronnes. Les sources visibles sur la figure 1 forment une de ces couronnes, chaque source émettant un faisceau de pompage dirigé directement vers le milieu amplificateur afin d'être absorbé par ledit milieu. Dans cet exemple, des guides de lumière 23 permettent de transporter les faisceaux émis par les sources de pompage vers le milieu amplificateur. Les guides de lumière sont par exemple formés d'un parallélépipède de verre assurant le transport vers le milieu amplificateur de la lumière émise par les deux sources d'une rangée.

Selon l'invention, la structure de pompage comprend un réflecteur diffusant entourant le milieu amplificateur et formé d'au moins trois blocs réflecteurs 24, chaque bloc réflecteur présentant une paroi interne 25 propre à réfléchir la lumière non absorbée par le milieu amplificateur. Le matériau formant le bloc réflecteur est par exemple un polymère du type Spectralon (marque déposée), connu pour être un matériau très diffusant, ou une céramique diffusant la lumière émise par les sources de pompage. Dans l'exemple de la figure 1, la paroi interne de chaque bloc réflecteur forme un tronçon de cylindre dont les génératrices sont parallèles à l'axe du milieu amplificateur. Ainsi, chaque bloc réflecteur permet d'une part de rediriger vers le milieu amplificateur la lumière réfléchie sur le barreau, dont les parois, avantageusement dépolies pour assurer une meilleure répartition de l'énergie dans le barreau, réfléchissent une partie de la lumière, et d'autre part de rediriger vers le milieu amplificateur la lumière qui n'a pas été absorbée lors des passages successifs à travers celui-ci.

Selon l'invention, chaque bloc réflecteur est porté par le longeron 21 qui supporte également les sources de pompage 22. Ainsi, dans l'exemple de la figure 1, trois longerons sont agencés radialement autour du barreau.

Le nombre de longerons supportant les blocs réflecteurs est avantageusement impair afin d'éviter que la lumière émise par une source de pompage ne puisse détériorer une source de pompage en vis-à-vis.

Cet agencement original de la structure de pompage selon l'invention permet, grâce à la structure modulaire obtenue, outre la réalisation d'un élément réflecteur permettant une très bonne homogénéité de pompage, d'obtenir une structure très compacte et facile à réaliser. En effet, les longerons forment des pièces mécaniques indépendantes faciles à assembler, et peuvent être agencés de telle sorte que les blocs réflecteurs qu'ils supportent soient sensiblement jointifs, ne laissant que l'espace nécessaire pour le passage des guides de lumière et formant ainsi un élément réflecteur qui entoure presque complètement le milieu amplificateur. De cette manière on évite la conception d'un élément réflecteur en une seule pièce et les contraintes technologiques qui y sont liées, telles que la nécessité de percer ou de traiter localement l'élément réflecteur pour permettre le passage des faisceaux lumineux issus des sources de pompage. Les sources de pompage et les guides de lumière sont également supportés par chacun des longerons, assurant ainsi une grande compacité à la structure. Avantageusement, les longerons sont agencés de telle sorte que les sources de pompage se trouvent réparties régulièrement sur des couronnes centrées sur l'axe du barreau (typiquement 3 ou 5 sources) ; les sources de pompage peuvent alors être toutes alimentées en série par l'intermédiaire de connecteurs électriques 26.

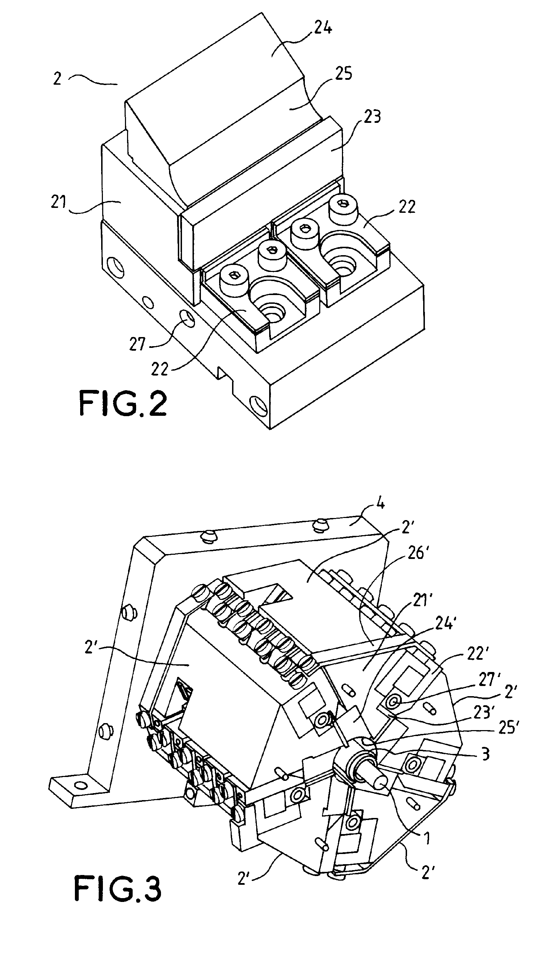

La figure 2 représente un module 2 formé d'un longeron 21 tel qu'il est mis en oeuvre dans l'exemple de la figure 1, et supportant un bloc réflecteur 24, deux sources de pompage 22 un guide de lumière 23.

Les sources de pompage sont montées par lignes sur le longeron 21 (ici deux sources de pompage 22). La lumière des sources de pompage est guidée jusqu'au milieu amplificateur (non représenté sur la figure 2) par le guide 23. Le guide est un parallélépipède de verre assurant le transport de la lumière par réflexions totales. Il est collé sur le même longeron 21 que la ligne de sources de pompage. La lumière des diodes, réfléchie par le barreau dépoli ou non absorbée après passage dans le milieu amplificateur, est diffusée par les blocs réflecteurs formant l'élément réflecteur diffusant. Sur la figure 2, le bloc réflecteur 24 est également fixé sur le longeron 21 de telle manière à présenter en vis-à-vis du barreau une paroi interne réfléchissante 25 dont la forme est celle d'un tronçon de cylindre dont les génératrices sont parallèles à l'axe du barreau. Il apparaît sur la figure 2 comment la ligne de sources de pompage, le guide de lumière et le bloc réflecteur sont montés sur le même longeron de façon à rendre facile l'assemblage mécanique.

La structure modulaire de la structure de pompage selon l'invention permet également d'assurer le refroidissement du milieu amplificateur et des sources de pompage grâce à une structure très compacte. Pour cela, la structure de pompage selon l'invention comprend avantageusement un circuit d'eau avec notamment une circulation d'eau pour le refroidissement du milieu amplificateur, une flasque d'entrée et une flasque de sortie pour la distribution en eau du circuit, les longerons étant fixés aux flasques par leurs extrémités. Ainsi sur la figure 1, la circulation d'eau pour le refroidissement du barreau est assurée grâce à un cylindre en verre 3 placé autour du barreau et à l'intérieur duquel circule l'eau de refroidissement. Le cylindre en verre est relié aux flasques d'entrée et de sortie (une seule de ces deux flasques, notée 4, étant visible sur la figure 1). Cette distribution d'eau par deux flasques assure une très grande compacité à l'ensemble de la structure de pompage. Deux connecteurs d'eau (non représentés) sont fixés sur les flasques pour le raccordement en eau.

Avantageusement, une circulation d'eau soit à l'intérieur de chaque longeron, soit à travers les embases sur lesquelles sont montées les sources de pompage permet par ailleurs le refroidissement des sources. Les flasques d'entrée et de sortie permettent la distribution de l'eau en parallèle vers le barreau et les sources. Ainsi, des conduits cylindriques notés 27 dans l'exemple de la figure 1 et 2, typiquement de quelques millimètres de diamètre, permettent la circulation de l'eau à travers chacun des longerons afin d'assurer le refroidissement des diodes laser.

Pour assurer une bonne fiabilité dans le temps à ces structures de pompage et éviter les problèmes de corrosion, il est important d'éviter les couples électrolytiques entre le cuivre dont sont formés de manière courante les embases des diodes laser et l'aluminium, via le circuit de refroidissement. Ainsi, lorsque l'eau de refroidissement circule directement dans les embases en cuivre des diodes laser, des matériaux comme l'acier, des céramiques, des plastiques chargés verre ou plus généralement tout matériau présentant un couple électrolytique sensiblement nul avec le cuivre peuvent être utilisés pour former le longeron ou au moins la partie du longeron en contact avec les embases. Les flasques peuvent être réalisées par exemple en acier pour éviter également les couples électrolytiques avec le cuivre. Il est également possible de prévoir un traitement de l'embase des diodes laser, de type traitement or-nickel afin de supprimer le couple électrolytique lorsque de l'aluminium est utilisé comme matériau dans la structure de pompage.

Une variante de réalisation de la structure de pompage selon l'invention est représentée sur la figure 3. Le milieu amplificateur est également un barreau 1 entouré d'un tube en verre 3 pour la circulation de l'eau de refroidissement entre deux flasques dont une seule (4) est représentée. Dans cet exemple, la structure de pompage comprend cinq modules notés 2' et formés de longerons 21' supportant notamment chacun une ligne de barrettes de diodes laser 22' (ici cinq barrettes par ligne). Notons que le nombre de lignes de sources de pompage autour du barreau (et donc le nombre de longerons) est préférentiellement impair pour s'adapter à la géométrie cylindrique mais un nombre pair de lignes de sources de pompage est également possible selon l'invention. Comme dans l'exemple précédent, chaque longeron supporte également un guide de lumière 23' formé d'un parallélépipède en verre, un bloc réflecteur 24' dont la paroi interne 25' forme un tronçon de cylindre dont les génératrices sont parallèles à l'axe du barreau. Les blocs réflecteurs sont fixés sur les longerons de telle sorte qu'ils soient sensiblement jointifs, ne laissant que l'espace nécessaire pour le passage des guides de lumière 23'. Les longerons sont agencés pour que les sources de pompage, ici des barrettes de diodes laser, se trouvent réparties régulièrement sur des couronnes (dans cet exemple cinq), assurant ainsi une illumination de l'ensemble du barreau. Chaque longeron porte un connecteur électrique 26' assurant l'alimentation électriques des sources de pompage 22' et, comme dans l'exemple de la figure 1, des conduits cylindriques 27' permettent la circulation de l'eau à travers chacun des longerons afin d'assurer le refroidissement des diodes laser.

Ainsi la structure de pompage par longerons tel que décrite à travers les exemples précédents permet outre une très bonne qualité de pompage du milieu amplificateur, un pompage direct du milieu amplificateur et de ce fait une structure très compacte, autorisant l'utilisation d'un grand nombre de sources de pompage dans un volume réduit.

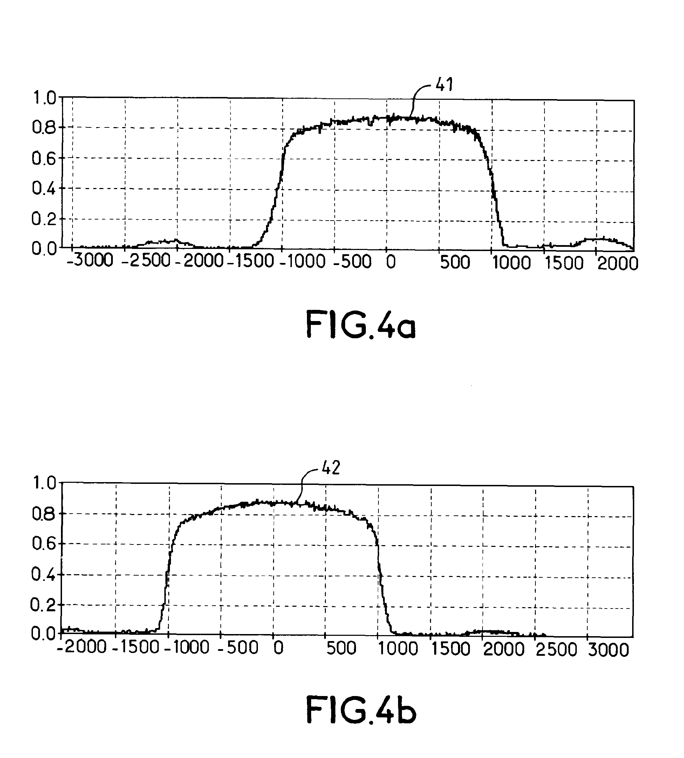

A titre d'exemple, les figures 4A et 4B montrent la répartition d'énergie mesurée par la déposante selon les deux axes horizontal et vertical (courbes notées respectivement 41 et 42) dans l'exemple de réalisation de la figure 2. Ces figures montrent une figure de pompage à symétrie de révolution permettant d'obtenir une excellente qualité de faisceau.

Une telle structure de pompage peut être utilisée par exemple dans un amplificateur laser dans lequel le milieu amplificateur est formé de Nd:YAG et les sources de pompage sont des diodes laser, des barrettes de diodes laser ou des empilements de barrettes émettant à 808 nm, dans un amplificateur laser dans lequel le milieu amplificateur est formé de Nd:YLF et les sources de pompage sont des diodes laser, des barrettes de diodes laser ou des empilements de barrettes émettant à 798 nm, dans un amplificateur laser dans lequel le milieu amplificateur est un verre dopé et les sources de pompage sont des diodes laser, des barrettes de diodes laser ou des empilements de barrettes émettant à 797 nm.

Cette structure de pompage est particulièrement bien adaptée pour un amplificateur laser à impulsions nanosecondes haute cadence utilisé pour le pompage de sources laser à impulsions ultracourtes (femtosecondes).

## Revendications

1. Structure de pompage optique d'un milieu amplificateur (1), comprenant un ensemble d'au moins trois sources lumineuses de pompage (22, 22') émettant chacune un faisceau de pompage dirigé directement vers le milieu amplificateur, **caractérisé en ce qu'**il comprend un réflecteur diffusant entourant le milieu amplificateur et formé d'au moins trois blocs réflecteurs en matériau diffusant (24, 24'), chaque bloc réflecteur présentant une paroi interne propre à réfléchir la lumière non absorbée par le milieu amplificateur et étant porté par un longeron (21, 21'), lesdits longerons supportant chacun au moins une source de pompage.

2. Structure de pompage selon la revendication 1, dans laquelle le milieu amplificateur formant un barreau cylindrique à base sensiblement circulaire, la paroi interne de chaque bloc réflecteur forme un tronçon de cylindre dont les génératrices sont parallèles à l'axe du milieu amplificateur.

3. Structure de pompage selon l'une des revendications précédentes, dans laquelle le milieu de pompage formant un barreau cylindrique à base sensiblement circulaire, chaque longeron supporte au moins deux sources de pompage, montées en ligne sur ledit longeron, de telle sorte que les sources soient réparties sur au moins deux couronnes centrées sur l'axe du barreau.

4. Structure de pompage selon l'une des revendications précédentes, comprenant, fixé sur chaque longeron, un guide de lumière (23, 23') permettant de transporter le faisceau émis par chaque source de pompage montée sur ledit longeron vers le milieu amplificateur.

5. Structure de pompage selon la revendication 4, dans laquelle le guide de lumière (23, 23') est formé d'un parallélépipède de verre assurant le transport de la lumière par réflexions totales.

6. Structure de pompage selon l'une des revendications précédentes, comprenant en outre un circuit d'eau avec notamment une circulation d'eau pour le refroidissement du milieu amplificateur, une flasque d'entrée (4) et une flasque de sortie pour la distribution en eau dudit circuit, les longerons (21, 21') étant fixés aux dites flasques par leurs extrémités.

7. Structure de pompage selon la revendication 6, dans laquelle le circuit d'eau comprend également une circulation d'eau pour le refroidissement des sources de pompage.

8. Structure de pompage selon la revendication 7, dans laquelle ladite circulation d'eau pour le refroidissement des sources de pompage passe dans chacun des longerons.

9. Structure de pompage selon la revendication 7, dans laquelle les sources de pompage étant montées sur des embases, ladite circulation d'eau pour le refroidissement des sources de pompage passe à travers les embases.

10. Structure de pompage selon la revendication 9, dans laquelle les embases sont en cuivre et le longeron est formé dans sa partie en contact avec lesdites embases d'un matériau présentant un couple électrolytique sensiblement nul avec le cuivre.

11. Structure de pompage selon la revendication 10, dans laquelle ledit matériau est de l'acier, du cuivre, une céramique ou un plastique chargé verre.

12. Structure de pompage selon l'une des revendications 6 à 11, dans laquelle les flasques sont en acier.

13. Structure de pompage selon l'une des revendications précédentes, comprenant un nombre impair de longerons.

14. Amplificateur laser comprenant un milieu amplificateur et une structure de pompage optique dudit milieu amplificateur selon l'une des revendications précédentes.

15. Amplificateur laser selon la revendication 14, dans lequel le milieu amplificateur est formé de Nd:YAG et les sources de pompage sont des diodes laser, des barrettes de diodes laser ou des empilements de barrettes émettant à 808 nm.

16. Amplificateur laser selon la revendication 14, dans lequel le milieu amplificateur est formé de Nd:YLF et les sources de pompage sont des diodes laser, des barrettes de diodes laser ou des empilements de barrettes émettant à 798 nm.

17. Amplificateur laser selon la revendication 14, dans lequel le milieu amplificateur est formé d'un verre dopé et les sources de pompage sont des diodes laser, des barrettes de diodes laser ou des empilements de barrettes émettant à 797 nm.

18. Source laser à impulsions ultracourtes comprenant un milieu amplificateur laser pompé par des impulsions laser émises par un amplificateur selon l'une des revendications 14 à 17.
